# EUROPÄISCHE PATENTANMELDUNG

(11) **EP 4 266 000 A1**
(43) Veröffentlichungstag der Anmeldung: **25.10.2023**
(21) Anmeldenummer: 23000045.7
(22) Anmeldetag: 27.03.2023
(51) Int. Cl.: G01B 11/02, G05B 19/401, G07F 11/10

(54) **VERFAHREN, VORRICHTUNG UND SYSTEM ZUR XY MESSUNG**

(30) Priorität: 22.04.2022 DE 102022109772
(71) Anmelder: Harting Systems GmbH, 32339 Espelkamp (DE)
(72) Erfinder: Tenhagen, Detlef, DE-32285 Rödinghausen (DE); Kettler, Jan, DE-32361 Preußisch Oldendorf (DE)

(57) **Zusammenfassung**

Die Erfindung betrifft ein Verfahren (V) zur XY Messung des Real-Zustands von Objektpositionen und Geometrien einer Vielzahl von N2 Speicher- und Ausgabeeinrichtungen (2) zur Aufnahme von Objekten (1), die jeweils aufeinanderfolgend benachbart in einer ersten Richtung (X) angeordnet sind, wobei die Speicher- und Ausgabeeinrichtungen (2) in einer zweiten Richtung (Y) aufeinanderfolgend benachbart in einer Reihe angeordnet sind; unter Verwendung einer in der zweiten Richtung (Y) verfahrbaren Messeinrichtung (3) mit einem Sensor (31), mit den Schritten:
- in einem ersten Schritt (S1) wird die Messeinrichtung (3) relativ zu den Speicher- und Ausgabeeinrichtungen (2) in der zweiten Richtung (Y) verfahrbar angeordnet und justiert;
- in einem zweiten Schritt (S2) wird eine Referenzfahrt der Messeinrichtung (3) in der zweiten Richtung (Y) mit einer kontinuierlichen Messung der Distanz (D) der Speicher- und Ausgabeeinheiten (2) durchgeführt, und daraus ein Profil (P) der Speicher- und Ausgabeeinrichtungen (2) bestimmt, und aus dem Profil (P) für jede Speicher- und Ausgabeeinrichtung (2) eine Messposition (Pmess) in der zweiten Richtung (Y) festgelegt;
- in einem dritten Schritt (S3) wird eine Messfahrt der Messeinrichtung (3) in der zweiten Richtung (Y) mit einer kontinuierlichen Messung der Distanz (D) durchgeführt, und für jede an den Messpositionen (Pmess) ermittelte Distanz (D) ein Füllstand (F) einer Speicher- und Ausgabeeinrichtung (2) ermittelt, der mit der Messposition (Pmess) korrespondiert.

Die Erfindung betrifft außerdem ein zur Durchführung des Verfahrens geeignetes Messsystem mit der Messeinrichtung (3) und einer Führungseinrichtung (4).

## Beschreibung

Die Erfindung betrifft ein Verfahren, eine Vorrichtung und ein System zur XY Messung des Real-Zustands von Objektpositionen und Geometrien in Speicher- und Ausgabesystemen und insbesondere eine für das Verfahren, die Vorrichtung und das System geeignete Messeinrichtung. Das Verfahren, die Vorrichtung und das System sind dabei insbesondere geeignet zur Erfassung von Waren in Speicher- und Ausgabeeinrichtungen eines Warenlagers oder Warenautomaten, wobei der Real-Zustand der Waren und Speicher- und Ausgabeeinrichtungen zeitgerecht insbesondere ereignisbezogen erfassbar ist.

In der Warenwirtschaft und insbesondere im Einzelhandel ist insbesondere auch für eine effiziente Logistik wünschenswert über möglichst exakte und aktuelle Informationen über den Warenbestand zu verfügen.

### Stand der Technik

Aus der WO 2017/207708 A1 und der DE 10 2013 222 263 A1 sind Warenbestandsverwaltungssysteme bekannt, die mehrere Alternativen zur Erfassung des Vorhandenseins von Waren in einem Lagerplatz vorschlagen. So kann mittels einer Lichtschranke geprüft werden, ob sich Waren im Erfassungsbereich der Lichtschranke befinden. Zur Erfassung von beispielsweise in einem Regal gelagerten Waren wird nachteilhaft für jedes Regalfach jeweils eine Lichtschranke benötigt. Alternativ kann mittels einer Sensorfolie das Gewicht der Waren bestimmt werden. Wenn das Stückgewicht der einzelnen Waren bekannt ist, lässt sich daraus deren Anzahl ermitteln. Zur Erfassung von Waren können außerdem RFID-Chips an den Waren angebracht werden.

Aus der DE 10 2018 205 108 A1 ist eine Anordnung zur Bereitstellung von Waren mit mindestens einem Lagerplatz bekannt, bei der die Waren in dem Lagerplatz in einer Reihe anordenbar sind, sowie ein Verfahren zur Überwachung des Füllstands mindestens eines Lagerplatzes. Der Lagerplatz ist derart ausgebildet, dass bei einer Warenentnahme die verbliebenen Waren so verschoben werden, dass eine von der entnommenen Ware hinterlassene Lücke geschlossen wird. Zur Überwachung des Füllstands umfasst die Anordnung jeweils einen auf eine Ware am Ende der Reihe gerichteten Wegsensor. Zur Überwachung des Füllstands der Lagerplätze einer Vielzahl von Anordnungen wird für jede Anordnung jeweils nachteilhaft eine entsprechende Vielzahl von Sensoren benötigt.

### Aufgabenstellung

Die Aufgabe der Erfindung besteht darin, ein effizientes und zuverlässiges Verfahren zur XY Messung von Objektpositionen und Geometrien in Speicher- und Ausgabesystemen anzugeben, das insbesondere zur Erfassung von Waren in Speicher- und Ausgabeeinrichtungen eines Warenlagers oder Warenautomaten geeignet ist. Das Verfahren soll dabei insbesondere geeignet sein, um den Real-Zustand der Waren und Speicher- und Ausgabeeinrichtungen zeitgerecht insbesondere ereignisbezogen zu erfassen.

Hierbei ist außerdem Aufgabe der Erfindung ein für das Verfahren geeignetes insbesondere kostengünstiges und nachrüstbares Messsystem mit einer geeigneten Messeinrichtung bereitzustellen.

Die Aufgabe wird durch die kennzeichnenden Merkmale des unabhängigen Anspruchs 1 gelöst.

Vorteilhafte Ausführungen der Erfindung sind in den Unteransprüchen und/oder der nachfolgenden Beschreibung angegeben.

Die Erfindung betrifft insbesondere ein Verfahren zur XY Messung des Real-Zustands von Objektpositionen und Geometrien in Speicher- und Ausgabesystemen, mit einer Vielzahl von N2 Speicher- und Ausgabeeinrichtungen zur Aufnahme von Objekten, die in einer Speicherund Ausgabeeinrichtung jeweils aufeinanderfolgend benachbart zueinander in einer ersten Richtung X insbesondere übereinander angeordnet sind.

Die N2 Speicher- und Ausgabeeinrichtungen sind dabei in einer zweiten Richtung Y aufeinanderfolgend benachbart zueinander in einer Reihe angeordnet.

Das Verfahren verwendet geeigneter Weise eine zur Erfassung der Distanz der Speicher- und Ausgabeeinrichtungen und deren Objekte in der zweiten Richtung Y verfahrbare Messeinrichtung mit einem zur Erfassung der Distanz der Speicher- und Ausgabeeinrichtungen und deren Objekte geeigneten Wegsensor. Das Verfahren ist somit besonders kostengünstig, nachdem eine Vielzahl von Speicher- und Ausgabeeinrichtungen mit deren Objekte unter Verwendung lediglich eines Sensors erfasst wird.

In einem ersten Schritt des Verfahrens wird die Messeinrichtung derart relativ zu den Speicher- und Ausgabeeinrichtungen in der zweiten Richtung Y verfahrbar angeordnet und dabei die Position des Sensors derart eingestellt und justiert, dass von dem Sensor eine ausgewählte Messhöhe in der ersten Richtung X der Speicher- und Ausgabeeinrichtungen und der in den Speicher- und Ausgabeeinrichtungen befindlichen Objekte ermittelt werden kann, wobei das oberste Objekt der übereinander angeordneten Objekte erfasst wird . In einem zweiten Schritt des Verfahrens wird eine Initialisierungsfahrt oder eine Kalibrierungsfahrt der Messeinrichtung in der zweiten Richtung Y mit einer kontinuierlichen Messung der Distanz durchgeführt, die jeweils als Referenzfahrten zur Ermittlung von vorteilhaft geeigneten Messpositionen in der zweiten Richtung Y durchgeführt werden.

Eine Initialisierungsfahrt wird vorteilhaft bei einer Ersteinrichtung der Messeinrichtung ohne jegliche Objekte mit leeren Speicher- und Ausgabeeinrichtungen einmalig durchgeführt, während eine Kalibrierungsfahrt geeigneter Weise bei einer Änderung eines Belegungsplans für die den Speicher- und Ausgabeeinrichtungen vorbestimmt zugeordneten Objekte und/oder bei Änderungen der Anzahl der Speicher- und Ausgabeeinrichtungen und/oder bei Änderung der Abmessung wenigstens einer Speicher- und Ausgabeeinrichtung in der zweiten Richtung Y durchgeführt wird. Eine Kalibrierungsfahrt kann auch mit zumindest einer zumindest teilweise mit Objekten befüllten Speicherund Ausgabeeinrichtung durchgeführt werden.

Aus der jeweils kontinuierlichen Messung der vorstehenden Referenzfahrten, nämlich der Initialisierungsfahrt oder einer Kalibrierungsfahrt, kann jeweils ein Distanz-Profil der Speicher- und Ausgabeeinrichtungen und der Objekte ermittelt werden, und aus dem Profil kann für jede Speicher- und Ausgabeeinrichtung und deren Objekte eine geeignete Messposition in der zweiten Richtung Y erstmalig oder neu festgelegt werden. Die geeigneten Messpositionen können geeigneter Weise abrufbar in einer Speichereinheit der Messeinrichtung gespeichert werden.

In einem dritten Schritt wird unter Verwendung der in dem zweiten Schritt gespeicherten Messpositionen eine Messfahrt der Messeinrichtung in der zweiten Richtung Y mit einer kontinuierlichen Messung der Distanz durchgeführt, und für jede an den Messpositionen ermittelte Distanz ein Füllstand der in einer Speicher- und Ausgabeeinrichtung angeordneten Objekte ermittelt, der mit der Messposition korrespondiert.

Der zweite Schritt wird wie vorstehend beschrieben geeigneter. Weise mit zumindest einer leeren Speicher- und Ausgabeeinrichtung durchgeführt. Der zweite Schritt wird insbesondere vorteilhaft im Anschluss an den ersten Schritt durchgeführt und außerdem durchgeführt, wenn eine Abmessung einer Speicher- und Ausgabeeinrichtung in Richtung Y eingestellt und demnach verändert wird, wobei in der zweiten Richtung Y eine mittige Position zwischen Positionen zweier benachbarter Minima der Distanz bzw. zweier benachbarter Maxima der Füllhöhe als Messposition zur Ermittlung des Füllstands festgelegt wird. Bei der einstellbaren Abmessung der Speicher- und Ausgabeeinrichtungen in der zweiten Richtung Y kann es sich insbesondere um deren Breite handeln.

Das Verfahren wird besonders vorteilhaft unter Verwendung einer Messeinrichtung verwendet, deren Sensor ein Wegsensor ist, der auf dem Prinzip der Laufzeitmessung (Time of Flight, ToF) beruht. Aus der Laufzeit kann die Distanz des ToF Sensors von einem Objekt und einer Speicherund Ausgabeeinrichtung ermittelt werden. Insbesondere kann es sich um einen Infrarotsensor oder einen Lasersensor handeln.

Besonders geeignet insbesondere auch zur Einstellung und Justierung der Messeinrichtung in dem ersten Schritt ist ein ToF Sensor mit einem Empfangsareal EA und einem einstellbaren Empfangsbereich ROI (Region of Interest), durch den sich wiederum das Sichtfeld FOV (Field of View) des Sensors einstellen lässt. In dem ersten Schritt wird zur Justierung des Sensors geeigneter Weise außerdem ein Winkel eines Messkegels des Sensors, der vereinfacht als Mess-Strahl angenommen werden kann, eingestellt. Der Klarheit halber und zum besseren Verständnis der Erfindung wird daher hier, sowie im gesamten Kontext der Anmeldung ein derartiger justierter Messkegel als Mess-Strahl bezeichnet.

Eine in dem zweiten Schritt festgelegte und in dem dritten Schritt verwendete Messposition in der zweiten Richtung Y kann jeweils geeigneter Weise mittels absolutem oder relativem Regelkreis und besonders vorteilhaft direkt über die Steuerung eines Antriebs zum Verfahren der Messeinrichtung in der zweiten Richtung Y ermittelt werden, wobei der Antrieb insbesondere ein Schrittmotor sein kann.

Das Verfahren zur Ermittlung des Füllstands einer Speicher- und Ausgabeeinrichtung kann besonders vorteilhaft zeitgleich zur Vermessung einer Anzahl von N3 Reihen von Speicher- und Ausgabeeinrichtungen verwendet werden, wobei jede der N3 Reihen eine Vielzahl von N2 Speicher- und Ausgabeeinrichtungen aufweist, die benachbart zueinander in der zweiten Richtung Y angeordnet sind.

Geeigneter Weise wird hierfür eine Messeinrichtung mit einer Anzahl von lediglich N3 Sensoren verwendet, wobei jeweils ein Sensor der N3 Sensoren einer Reihe der N3 Reihen mit deren N2 Speicher- und Ausgabeeinrichtungen zugeordnet wird. Es ist klar, dass hierbei die Anzahl N2 der N3 Reihen sich unterscheiden kann, und außerdem die Abmessung der Speicher- und Ausgabeeinrichtungen insbesondere in ihrer Breite variieren kann.

Das vorstehend beschriebene Verfahren kann insbesondere vorteilhaft an einem Warenautomaten durchgeführt werden, dessen Waren in eine Ausgabeeinheit aufweisenden Warenschächten in der ersten Richtung X benachbart zueinander angeordnet sind, und dessen Warenschächte in N3 Reihen in der zweiten Richtung Y benachbart zueinander angeordnet sind. Das Verfahren lässt sich demnach auf einen Warenautomaten anwenden, wobei die vorstehend beschriebenen Speicher- und Ausgabeeinrichtungen Warenschächte des Warenautomaten sind, und deren Objekte zum Verkauf angebotene Waren sind.

Insbesondere bei der Anwendung des Verfahrens auf einen Warenautomaten kann der dritte Schritt vorteilhaft vorbestimmt zeitlich getaktet wiederholt werden und/oder auf ein vorbestimmtes Ereignis ausgelöst werden, so dass eine ereignisbezogene zeitgerechte Ermittlung des Real-Zustands des Warenbestands in dem Warenautomaten bereitgestellt ist. Das vorstehend beschriebene Verfahren ist daher in der Warenwirtschaft und insbesondere im Einzelhandel von besonderem Vorteil, nachdem das Verfahren die Bereitstellung von für eine effiziente Logistik wünschenswerten möglichst exakten und aktuellen Informationen über den Warenbestand ermöglicht.

Beispielsweise kann zur Durchführung des dritten Schritts des Verfahrens ein entsprechendes Steuersignal an die verwendete Messeinrichtung von einer Bedienperson des Warenautomaten oder beim Schließen einer Tür des Warenautomaten ausgelöst werden. Außerdem kann ein derartiges Steuersignal vorteilhaft bei Ausgabe einer Ware aus dem Warenautomaten ausgelöst werden, wonach der ereignisbezogene Real-Zustand der Waren und Speicher- und Ausgabeeinrichtungen zeitgerecht insbesondere nach Warenausgabe erfassbar ist.

Wie vorstehend beschrieben wird zur Durchführung des Verfahrens vorteilhaft lediglich eine verfahrbare Messeinrichtung mit einer Anzahl von N3 ToF Sensoren verwendet.

Die Erfindung betrifft demnach außerdem eine Messeinrichtung sowie ein Messsystem mit einer Messeinrichtung, die zur Durchführung des vorstehend beschriebenen Verfahrens besonders geeignet sind. Die N3 ToF Sensoren können dabei auf geeigneten Sensorhaltern der Messeinrichtung geeigneter Weise in einer dritten Richtung Z in einer Reihe angeordnet sein.

Die Messeinrichtung zur Durchführung des Verfahrens weist wie vorstehend beschrieben vorteilhaft einen Wegsensor zur Messung einer Distanz von Objekten in der Vielzahl N2 von Speicher- und Ausgabeeinrichtungen auf, die in den Speicher- und Ausgabeeinrichtungen jeweils aufeinanderfolgend benachbart zueinander in der ersten Richtung X angeordnet sind. Die Speicher- und Ausgabeeinrichtungen sind in der zweiten Richtung Y aufeinanderfolgend benachbart zueinander in einer Reihe angeordnet, und die Messeinrichtung weist einen Schrittmotor zum Verfahren der Messeinrichtung in der zweiten Richtung Y auf.

Der Sensor der Messeinrichtung ist besonders vorteilhaft ein ToF Sensor, der ein integriertes Sendeelement, Empfangselement und eine integrierte I2C-Bus-Schnittstelle aufweist. Der Sensor kann außerdem vorteilhaft ein Infrarotlicht ToF Sensor mit einem einstellbaren Sichtfeld FOV und einem entsprechend einstellbaren Empfangsbereich ROI sein, so dass der Empfangsbereich ROI und damit auch ein Winkel eines Mess-Strahls des Sensors zur Justierung des Sensors auf einfache Weise eingestellt werden kann.

Für die Einstellung des ToF Sensors weist das Empfangselement des Sensors der Messeinrichtung geeigneter Weise ein aus einer Matrix von 16x16 Fotodioden bestehendes Empfangsareal EA mit einem einstellbaren Sichtfeld FOV und einem entsprechend einstellbaren Empfangsbereich ROI auf. Ein eingestellter Empfangsbereich ROI kann ein beliebiger aus mindestens 4x4 Fotodioden bestehender entsprechend eingeschränkter Bereich des vollständigen aus 16x16 Fotodioden bestehenden Empfangsareals EA sein. Diese vorteilhafte Eigenschaft des ToF Sensors kann nämlich dazu verwendet werden das kegelförmige Sichtfeld FOV des Sensors mit einem Öffnungswinkel von 27° auf ein eingeschränktes Sichtfeld mit einem Öffnungswinkel von 27°/4 von etwa 6.75° zu reduzieren. Die Einstellung des Empfangsbereichs ROI erfolgt dabei mittels Software, wobei mit der Einstellung des Empfangsbereichs ROI auch eine Einstellung des Winkels des Mess-Strahls vorgenommen werden kann.

Eine alternative oder zusätzliche Justierung des Winkels des Mess-Strahls des Sensors kann geeigneter Weise mittels einer mechanischen Einstellung der Position des Sensors auf einem Sensorhalter bereitgestellt sein, wofür die Messeinrichtung geeignete Justierelemente aufweisen kann.

Es ist außerdem von Vorteil, wenn die Messeinrichtung einen ToF Sensor aufweist, der in einem Messbereich von etwa 1 Meter eine Auflösung im mm-Bereich und ein einstellbares Messintervall vom 20 bis 500 Millisekunden aufweist, womit der Sensor für, die von einem vorbestimmten Ereignis ausgelöste, zeitgerechte Ermittlungen eines Real-Zustands besonders geeignet ist.

Die Messeinrichtung kann vorteilhaft außerdem eine Steuer- und/oder Auswerteinheit zur Steuerung des Schrittmotors und/oder zur Erfassung von Signalen des Sensors und Auswertung der Signale des Sensors und zur Ermittlung von Messwerten der Distanz, der Füllhöhe und des Füllstands der Speicher- und Ausgabeeinrichtungen an den festgelegten Messpositionen des Sensors in der zweiten Richtung Y, und eine Schnittstelle zur Signal- und Datenübertragung aufweisen.

Für den Betrieb der Messeinrichtung ist außerdem von Vorteil, wenn die Messeinrichtung eine Speichereinheit zur Speicherung der in der zweiten Richtung Y festgelegten Messpositionen und/oder der an den Messpositionen ermittelten Messwerte aufweist.

Die vorstehend beschriebene Messeinrichtung ist wie das ebenfalls beschriebene Verfahren besonders zur Ermittlung des Füllstands von Warenschächten eines Warenautomaten geeignet, wobei die Speicherund Ausgabeeinrichtungen Warenschächte des Warenautomaten sind und die Objekte zum Verkauf angebotene Waren sind.

Für eine einfache und nachrüstbare Installation der verfahrbaren Messeinrichtung sowie für einen besonders zuverlässigen Betrieb der Messeinrichtung insbesondere an einem Warenautomaten ist eine besonders geeignete Führungseinrichtung vorgesehen.

Die Erfindung ist demnach außerdem auf ein zur Durchführung des vorstehend beschriebenen Verfahrens geeignetes Messsystem gerichtet, das eine vorstehend beschriebene Messeinrichtung, und das eine für den Betrieb und die Installation der Messeinrichtung insbesondere an einem Warenautomaten geeignete vorteilhafte Führungseinrichtung umfasst.

Das Messsystem weist demnach die Messeinrichtung und geeigneter Weise eine Führungseinrichtung zur Führung der Messeinrichtung in der zweiten Richtung Y auf, wobei die Führungseinrichtung vorteilhaft als eine zweiläufige Linearführung ausgebildet ist, die mit an der Messeinrichtung ausgebildeten Gleitlagern oder Gleitelementen korrespondiert. Geeigneter Weise kann die Führungseinrichtung als flache Schiene aus einem geeigneten Kunststoff und insbesondere vorteilhaft als Metallschiene und deren Linearführungen als jeweils innenläufige Führung in der Kunststoffoder Metallschiene ausgebildet sein.

Die Führungseinrichtung weist zur Stromversorgung der Messeinrichtung und/oder zur signal- und datentechnischen Verbindung mit einer externen Steuereinheit vorteilhaft ein Stromschienensystem mit zwei zu der Linearführung parallel verlaufenden Stromschienen auf, die geeigneter Weise mit an der Messeinrichtung korrespondierend vorgesehenen und ausgebildeten Gleit- oder Schleifkontakten zusammenwirken.

Zum Verfahren der Messeinrichtung in der zweiten Richtung Y weist die Führungseinrichtung vorteilhaft eine Zahnschiene auf, die mit dem Schrittmotor der Messeinrichtung zusammenwirkt, wobei an der Achse des Schrittmotors ein hierfür geeignetes mit der Zahnschiene korrespondierendes Zahnrad vorgesehen ist.

Für einen besonders zuverlässigen Betrieb erstreckt sich die Zahnstange der Führungseinrichtung linear und zentral in der zweiten Richtung Y. Hierbei sind außerdem die beiden Stromschienen jeweils auf einer Seite der Zahnschiene angeordnet. Die zweiläufige Linearführung ist mit ihrer ersten und zweiten sich in der zweiten Richtung Y erstreckenden und geeigneter Weise innenläufig ausgebildeten Linearführung jeweils ebenfalls benachbart zu einer Stromschiene angeordnet.

Die Führungseinrichtung weist demnach in einer dritten Richtung Z ein vorteilhaftes Profil mit ihrer ersten Linearführung, ersten Stromschiene, mittigen Zahnschiene, zweiten Stromschiene und ihrer zweiten Linearführung auf, die in dieser Richtung aufeinanderfolgend benachbart zueinander angeordnet sind und dabei geeigneter Weise jeweils etwa den gleichen Abstand aufweisen.

Das vorstehend beschriebene Messsystem ist mit einer N3 Sensoren aufweisenden Messeinrichtung insbesondere für einen Warenautomaten mit einer Anzahl von N3 Reihen von Speicher- und Ausgabeeinrichtungen geeignet, der ein in der zweiten Richtung Y verlaufendes Förderband zur Warenausgabe aufweisen kann.

Das Messsystem kann mit seinen Merkmalen auf einfache Weise auch nachrüstbar und individuell an die Ausstattung des Warenautomaten angepasst an einer Automatendecke eines Gehäuses des Warenautomaten an einer geeigneten Position insbesondere über einem Förderband in dem Warenautomaten installiert werden. Beispielsweise kann hierfür die Messeinrichtung mit einer entsprechenden Anzahl N3 von Sensoren ausgestattet sein, die mit der Anzahl N3 der Reihen von Speicher- und Ausgabeeinrichtungen korrespondiert.

Die Stromversorgung mit den beiden Stromschienen des Messsystems, die auch zur Signal- und Datenübertragung verwendet werden können, sind hierfür von besonderem Vorteil, nachdem sie eine vorteilhafte Doppelfunktion aufweisen und für deren Anschluss an den Warenautomaten lediglich ein Kabel benötigt wird. Alternativ kann die Signal- und Datenübertragung auch über eine drahtlose Schnittstelle erfolgen.

Weitere Vorteile und Merkmale der Erfindung insbesondere auch von Messanordnungen ergeben sich aus der nachfolgenden Beschreibung von vorteilhaften Ausführungsbeispielen unter Bezugnahme auf die begleitenden Zeichnungen.

### Ausführungsbeispiele

Ausführungsbeispiele der Erfindung sind in den Zeichnungen dargestellt und werden im Folgenden näher erläutert. Es zeigen:
- Fig. 1A: eine schematische Darstellung einer Messanordnung nach einer Ausführung der Erfindung mit einer grafischen Darstellung der grundlegenden Funktionsweise eines erfindungsgemäß verwendeten Wegsensors;
- Fig. 1B: eine grafische Darstellung von Eigenschaften eines erfindungsgemäß verwendeten Sensors einer Messeinrichtung nach einer Ausführung der Erfindung;
- Fig. 2A: eine für eine Messanordnung nach einer Ausführung der Erfindung geeignete Speicher- und Ausgabeeinrichtung;
- Fig. 2B, C: weitere Messanordnungen nach einer Ausführung der Erfindung;
- Fig. 2D: eine grafische Darstellung eines unter Verwendung der Messanordnung von Fig. 2B oder C ermittelten Messprofils;
- Fig. 3A: Beispiele von Speicher- und Ausgabeeinrichtungen eines Warenautomaten;
- Fig. 3B: Beispiele von Kombinationen der Speicher- und Ausgabeeinrichtungen von Fig. 3A
- Fig. 4: Darstellungen eines Schnitts durch einen Warenautomaten mit einer Messanordnung und einer Messeinrichtung nach einer Ausführung der Erfindung;
- Fig. 5A: einen Bereich des Warenautomaten mit der Messanordnung und der Messeinrichtung von Fig. 4;
- Fig. 5B: eine grafische Darstellung eines unter Verwendung der Messanordnung von Fig. 5A ermittelten Messprofils;
- Fig. 6A: eine schematische Darstellung eines Messsystems nach einer Ausführung der Erfindung mit einer Messeinrichtung und einer für die Messeinrichtung geeigneten Führungseinrichtung;
- Fig. 6B: das Messsystem von Fig. 6A aus einer anderen Perspektive mit einer abgewandelten Messeinrichtung;
- Fig. 7: eine schematische Darstellung eines Warenautomaten nach einer Ausführung der Erfindung; und
- Fig. 8: in einem Flussdiagramm Schritte eines Verfahrens nach einer Ausführung der Erfindung.

Die Figuren enthalten teilweise vereinfachte, schematische Darstellungen. Zum Teil werden für gleiche, aber gegebenenfalls nicht identische Elemente identische Bezugszeichen verwendet. Nicht alle Bezugszeichen sind in allen Zeichnungen dargestellt. Verschiedene Ansichten gleicher Elemente könnten unterschiedlich skaliert sein.

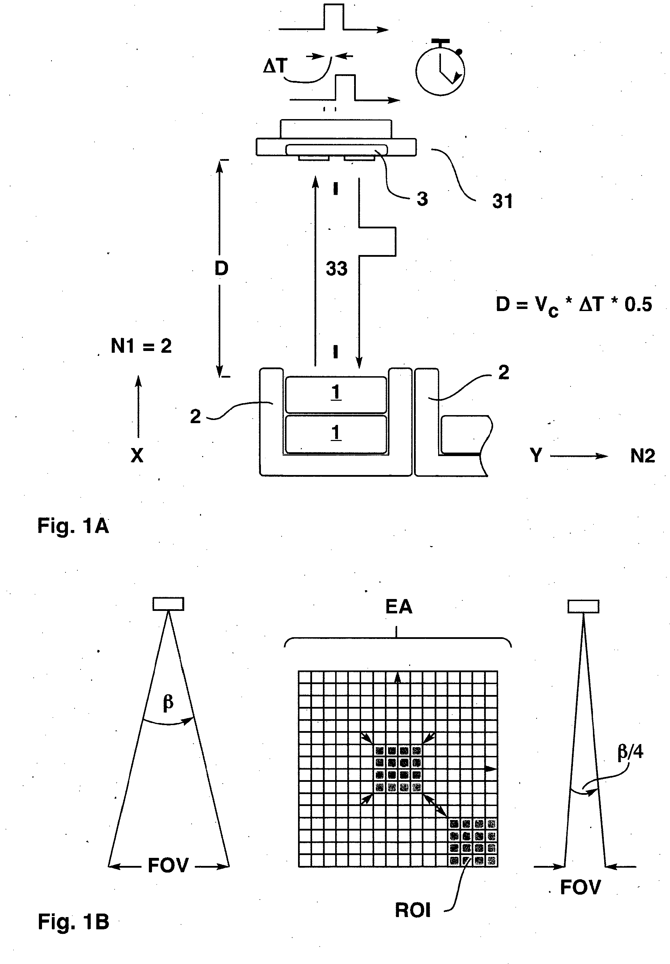

Fig. 1A zeigt eine schematische Darstellung einer Messanordnung nach einer Ausführung der Erfindung mit einer grafischen Darstellung der grundlegenden Funktionsweise einer erfindungsgemäß verwendeten Messeinrichtung 3 mit einem vorteilhaft verwendeten Wegsensor 31.

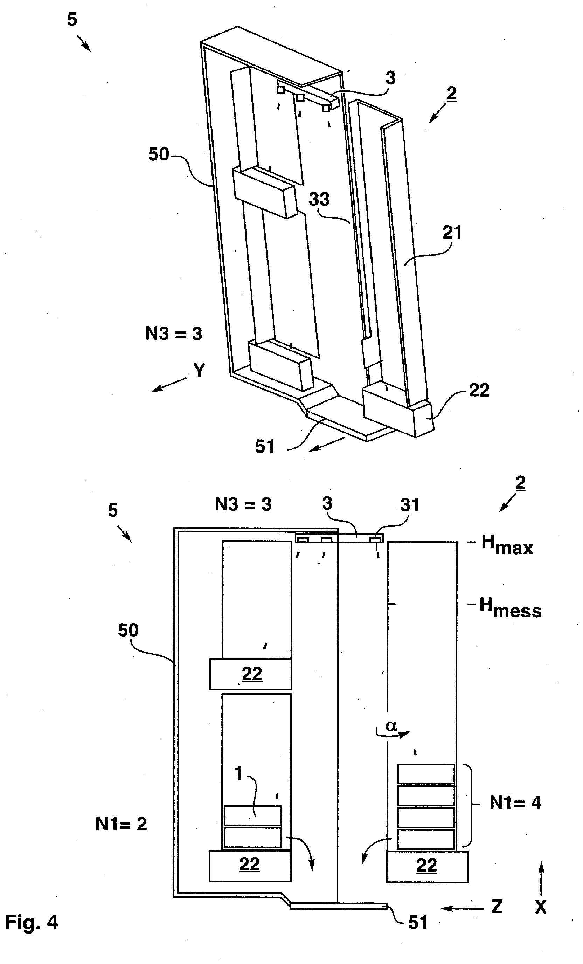

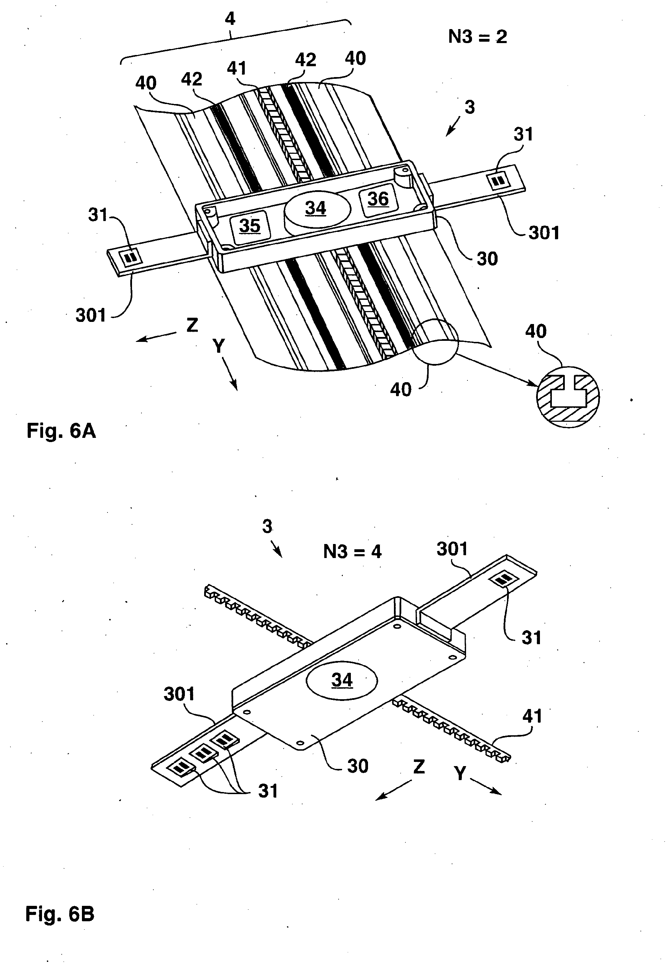

Eine Anzahl von N1 Objekten 1 sind in einer Speicher- und Ausgabeeinrichtung 2 in einer ersten Richtung X übereinander angeordnet. Als Wegsensor 31 ist vorteilhaft ein ToF Sensor 31 ausgewählt, der Lichtimpulse aussendet und deren von einem Objekt 1 oder der Speicher- und Ausgabeeinrichtung 2 reflektierte Impulse empfängt, und deren Zeitdifferenz ToF, ΔT ermittelt, die der Laufzeit ΔT des Lichtimpulses entspricht. Aus der Laufzeit ΔT kann der Abstand oder eine Distanz D des Sensors 31 von dem Objekt 1 und der Speicher- und Ausgabeeinrichtung 2 ermittelt werden. Es gilt D = Vc * ΔT * 0.5. Der Sensor 31 kann Element einer Messeinrichtung 3 nach einer Ausführung der Erfindung sein, die insbesondere nachfolgend unter Bezugnahme von Fig. 4 und Fig. 6A und B beschrieben wird.

Die Messeinrichtung 3 der Messanordnung von Fig. 1A ist mit ihrem Sensor 31 derart relativ zu der Speicher- und Ausgabeeinrichtung 2 angeordnet, dass der Abstand D des Objekts 1 von dem Sensor 31 ermittelt wird. Dabei ist der Mess-Strahl 33 senkrecht auf die Oberfläche des Objekts 1 gerichtet. In einer zweiten Richtung Y können weitere Speicher- und Ausgabeeinrichtungen 2 mit Objekten 1 jeweils benachbart zueinander angeordnet sein, wonach bei einer entsprechenden Verschiebung bzw. Positionierung der Messeinrichtung 3 in Y-Richtung der Abstand D deren Objekte 1 analog ermittelt werden kann.

Fig. 1B zeigt eine grafische Darstellung von Eigenschaften eines erfindungsgemäß verwendeten Sensors 31 einer Messeinrichtung 3 nach einer Ausführung der Erfindung,

Geeigneter Weise wird ein ToF Sensor 31 mit einem integrierten Sendeelement, Empfangselement und einer integrierten I2C-Bus Schnittstelle verwendet, der einen gemittelten Distanzwert D über ein einstellbares Messintervall vom 20 bis 500 Millisekunden liefert. Es ist von Vorteil, wenn der ToF Sensor 31 Infrarotlicht verwendet, wobei eine diffuse, streuende Reflexion der gesendeten Lichtimpulse an der Oberfläche eines Objekts 1 oder einer Speicher- und Ausgabeeinrichtung 2 auftritt.

Es ist außerdem von Vorteil, wenn sich das Empfangselement des Sensor 31 derart programmieren lässt, dass ein Empfangsbereich ROI (Region of Interest) eines Sichtfelds FOV (Field of View) ausgewählt und eingestellt werden kann. Das Empfangselement des verwendeten ToF Sensors 31 weist hierfür geeigneter Weise ein aus einer Matrix von 16x16 Fotodioden bestehendes maximales Empfangsareal EA auf, das sich auf ein beliebiges Feld aus mindestens 4x4 Fotodioden reduzieren lässt. Diese vorteilhafte Eigenschaft des verwendeten Sensors 31 kann dazu verwendet werden das maximale kegelförmige Sichtfeld FOV des Sensors mit einem Winkel β von 27° auf einen Empfangsbereich ROI eines entsprechend eingeschränkten Sichtfelds FOV mit einem Winkel von β/4 von etwa 6.75° zu reduzieren.

In der Zeichnung sind hierzu beispielhaft jeweils ein entsprechend reduzierter zentraler Empfangsbereich ROI und ein an einem Rand des maximalen Empfangsareals EA angeordneter reduzierter Empfangsbereich ROI dunkel dargestellt. Ein entsprechend reduzierter Empfangsbereich ROI des maximalen Empfangsareals EA führt bei einer geringeren Messgenauigkeit und einem ggf. erhöhten Messintervall vorteilhaft zu einem entsprechend reduzierten schmaleren Messkegel.

Der Sensor 31 ist für eine geeignete Messung derart relativ zu der ersten Speicher- und Ausgabeeinrichtung 2 angeordnet, dass das obere Objekt 1 innerhalb des Sichtfelds FOV des Sensors 31 liegt. In der schematischen Messanordnung von Fig. 1A ist die Messeinrichtung 3 mit dem Sensor 31 beispielhaft derart angeordnet, dass das obere Objekt 1 der Speicher- und Ausgabeeinrichtung 2 in dem Sichtfeld FOV des Sensors liegt und dabei der Mess-Strahl 33 des Lichts senkrecht auf die Oberfläche des Objekts 1 gerichtet ist. Mittels einer Verschiebung der Messeinrichtung 3 mit dem Sensor 31 in der zweiten Richtung Y kann das Sichtfeld FOV derart ausgerichtet werden, dass eine Wand 21 einer Speicher- und Ausgabeeinrichtung 2 oder das Objekt 1 in der zweiten Speicher- und Ausgabeeinrichtung 2 in dem eingestellten Empfangsbereich ROI des Sensors 31 liegt.

Die Verwendung von Infrarotlicht und einer streuenden, diffusen Reflexion des Mess-Strahls 33 an der Oberfläche eines Objekts 1 oder einer Speicher- und Ausgabeeinrichtung 2, sowie eine Einstellung des Empfangsbereich ROI des Sichtfelds FOV ist außerdem von Vorteil für eine erfindungsgemäße Messanordnung, bei der anders als bei der Messanordnung von Fig. 1A der Mess-Strahl 33 in einem gegenüber der Senkrechten abweichenden Winkel α auf ein Objekt 1 oder eine Speicherund Ausgabeeinrichtung 2 gerichtet ist.

Es ist außerdem von Vorteil, wenn ein ToF Sensor 31 verwendet wird, der in einem Messbereich von 1 Meter eine Auflösung im mm-Bereich aufweist. Darüber hinaus ist ein ToF Sensor 31 mit einem einstellbaren Messintervall vom 20 bis 500 Millisekunden auch für Echtzeit Messungen geeignet und damit insbesondere auch für auf ein vorbestimmtes Ereignis ausgelöste zeitgerechte Ermittlungen eines Real-Zustands besonders geeignet

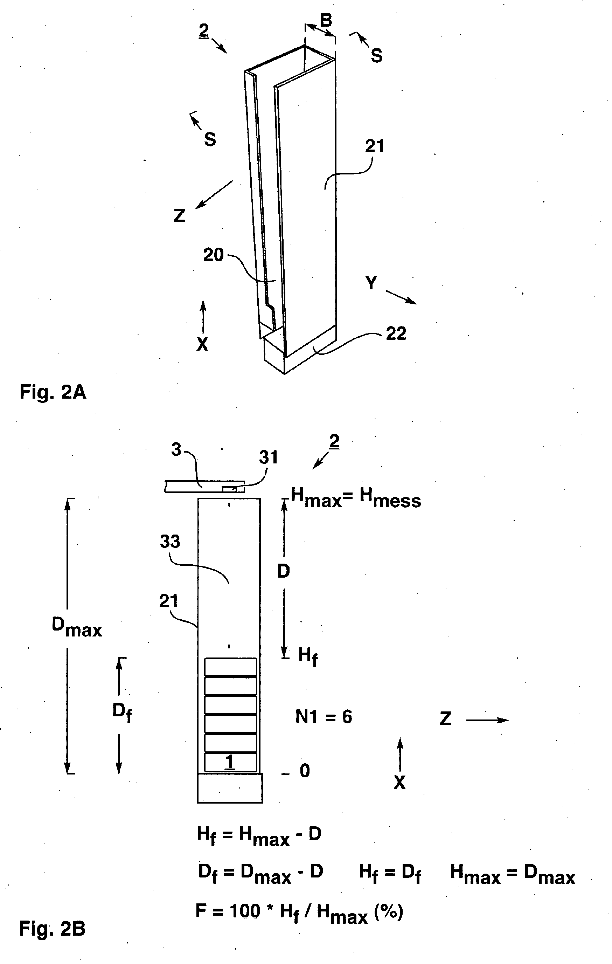

Fig. 2A zeigt eine für eine Messanordnung mit einer Messeinrichtung 3 nach einer Ausführung der Erfindung geeignete Speicher- und Ausgabeeinrichtung 2 in einer perspektivischen Darstellung, bei der es sich um einen Warenschacht 2 eines Warenautomaten 5 handelt.

Die Speicher- und Ausgabeeinrichtung 2 ist nach oben offen ausgebildet und weist sich in X-Richtung erstreckende Wände 21 und eine Breite B in Y-Richtung auf. Eine Seite 20 der Speicher- und Ausgabeeinrichtung 2 ist offen ausgebildet, so dass in der Speicher- und Ausgabeeinrichtung 2 in X-Richtung übereinander angeordnete Objekte 1 von außen aus einer dritten Richtung Z sichtbar sind. Bei den Objekten 1 handelt es sich um Waren 1, die über eine Ausgabeeinheit 22 der Speicher- und Ausgabeeinrichtung 2 ausgegeben werden.

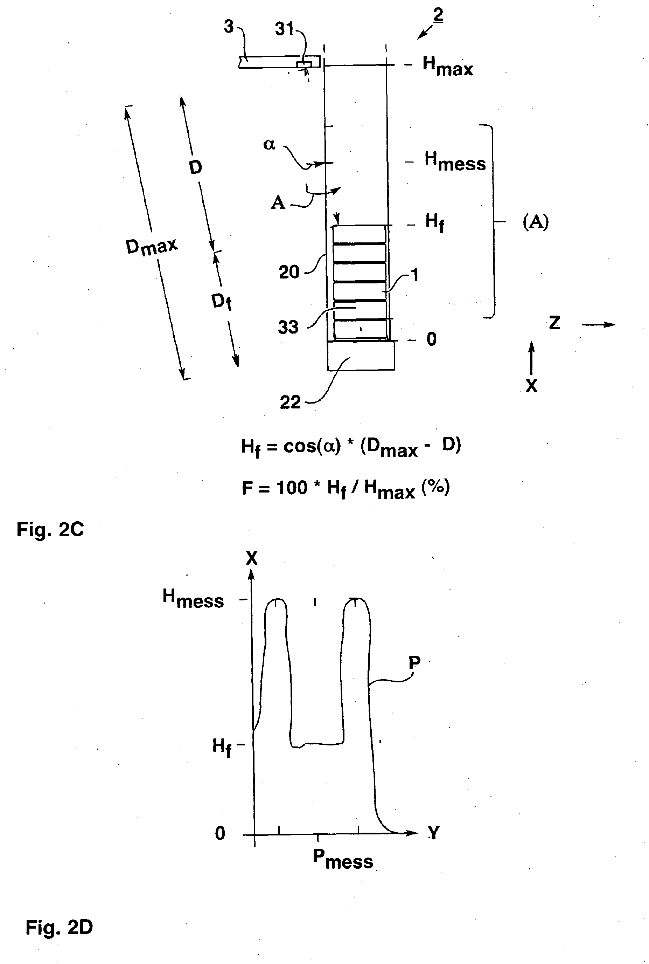

Fig. 2B und C zeigen weitere Messanordnungen mit einer Messeinrichtung 3 nach einer Ausführung der Erfindung und mit einer Speicher- und Ausgabeeinrichtung 2 von Fig. 2A aus einer anderen Perspektive. Dargestellt ist jeweils ein Längsschnitt entlang der Linie S der Speicher- und Ausgabeeinrichtung 2 in X-Richtung in einer Draufsicht in Y-Richtung.

In den Speicher- und Ausgabeeinrichtungen 2 sind jeweils N1 = 6 Objekte 1 in X-Richtung übereinander angeordnet. Die Speicher- und Ausgabeeinrichtungen 2 weisen jeweils eine mit Objekten 1 maximal befüllbaren Höhe Hmax, die Füllhöhe Hf der sechs Objekte 1 und eine von den Messeinrichtungen 3 jeweils erfassbare Höhe Hmess auf.

Die Messeinrichtung 3 der Messanordnung von Fig. 2B ist mit ihrem Sensor 31 über der nach oben offenen Speicher- und Ausgabeeinrichtung 2 angeordnet, und der Mess-Strahl 33 des Sensors 31 ist senkrecht auf das oberste Objekt 1 gerichtet. Diese Messanordnung korrespondiert demnach mit der Messanordnung von Fig. 1A, weshalb diesbezüglich hier auf die vorstehende Beschreibung verwiesen wird.

Ein senkrecht auf das Objekt 1 oder eine obere Kante einer Wand 21 gerichteter Mess-Strahl 33 ist von Vorteil für die Messgenauigkeit des Sensors 31. Aus dem von der Messeinrichtung 3 in dieser Messanordnung ermittelten Abstand D und der maximal befüllbaren Höhe Hmax kann hier die Füllhöhe als Hf = Hmax - D bzw. Df = Dmax - D bestimmt werden, da in dieser Messanordnung Dmax = Hmax gilt und entsprechend Hf = Df gilt. Mit Dmax ist der Abstand zwischen Sensor und Schachtboden angegeben, und Df entspricht wie der vorstehenden Gleichung entnommen werden kann der Differenz des gemessenen Anstands D von dem Abstand Dmax. Die mit dieser Messanordnung von Fig. 2A maximal detektierbare Messhöhe Hmess entspricht der maximalen Füllhöhe Hmax.

Die Messeinrichtung 3 der Messanordnung von Fig. 2C ist mit ihrem Sensor 31 etwa auf dem Niveau der maximalen Füllhöhe Hmax benachbart zu der offenen Seite 20 der Speicher- und Ausgabeeinrichtung 2 angeordnet, wobei der Mess-Strahl 33 des Sensors 31 in einem von der Senkrechten abweichenden Winkel α auf die Speicher- und Ausgabeeinrichtung 2 und das oberste Objekt 1 gerichtet ist. Der Sensor 31 ist für diese Anordnung auf geeignete Weise mechanisch justiert und/oder der Empfangsbereich ROI des Sensors 31 ist wie vorstehend unter Bezugnahme auf Fig. 1B beschrieben entsprechend eingestellt. Weitere Messanordnungen nach einer Ausführung der Erfindung werden nachfolgend unter Bezugnahme auf Fig. 4 beschrieben.

Die mit dieser Messanordnung maximal detektierbare Messhöhe Hmess ist von dem Winkel α des Mess-Strahls 33 abhängig und kleiner als die maximale Füllhöhe Hmax. Ein kleiner Winkel α eines Winkelbereiches A, in dem ein erstes benachbart zu der Ausgabeeinheit 22 angeordnetes Objekt 1 erfassbar ist, führt bei einer kleineren Messdistanz D zu einer kleinen erfassbaren Messhöhe Hmess, während ein großer Winkel α eine entsprechend größere erfassbare Messhöhe Hmess ermöglicht.

Nachdem andererseits wie vorstehend beschrieben ein möglichst kleiner Winkel α von Vorteil für die Messgenauigkeit des Sensors 31 ist, wird bei der mechanischen Justierung und/oder ROI Einstellung des Sensors 31 ein möglichst kleiner Winkel α des Winkelbereiches A von bevorzugt kleiner 45° und besonders bevorzugt kleiner 10° ausgewählt. Auf diese Weise ist vorteilhaft sichergestellt, dass eine Messhöhe Hmess und eine Füllhöhe Hf mit einer hinreichenden Genauigkeit detektierbar ist, die eine Detektion eines Leerstands der Speicher- und Ausgabeeinrichtung 2 sicherstellen.

Die mit dieser Messanordnung maximal detektierbare Messhöhe Hmess ist entsprechend kleiner als die maximale Füllhöhe Hmax. Aus dem von der Messeinrichtung 3 in dieser Messanordnung ermittelten Abstand D, der maximalen Distanz Dmax, der maximal befüllbaren Höhe Hmax und dem eingestellten Winkel α kann die Füllhöhe Hf = cos(α) (Dmax - D) berechnet werden.

Aus der maximalen Füllhöhe Hmax und der ermittelten Füllhöhe Hf wird nun der Füllstand F = 100 * Hf / Hmax geeigneter Weise in % angegeben.

Mittels Verschiebung bzw. Verfahren der Messeinrichtung 3 der beiden Messanordnungen von Fig. 2B und C in Y-Richtung kann ein lineares Profil P der Speicher- und Ausgabeeinrichtungen 2 mit deren Füllhöhe Hf ermittelt werden, das in Fig. 2D grafisch dargestellt ist. Das Profil P weist zwei ausgeprägte Maxima jeweils der seitlichen Wände 21 der Speicherund Ausgabeeinrichtung 2 bzw. der Messhöhe Hmess und ein relatives Minimum der Füllhöhe Hf der Objekte 1 auf. Geeigneter Weise wird zur Ermittlung der Füllhöhe Hf und des Füllstands F der Messwert an der Position Pmess herangezogen und für eine erneute Messung festgelegt, die mittig zwischen den beiden Y-Positionen der Maxima des Profils P liegt, die einen Abstand aufweisen, der der Breite B einer Speicher- und Ausgabeeinrichtung 2 entspricht. Wie vorstehend beschrieben wird eine entsprechende Referenzfahrt bevorzugt mit mindestens einer leeren Speicher- und Ausgabeeinrichtung 2 durchgeführt.

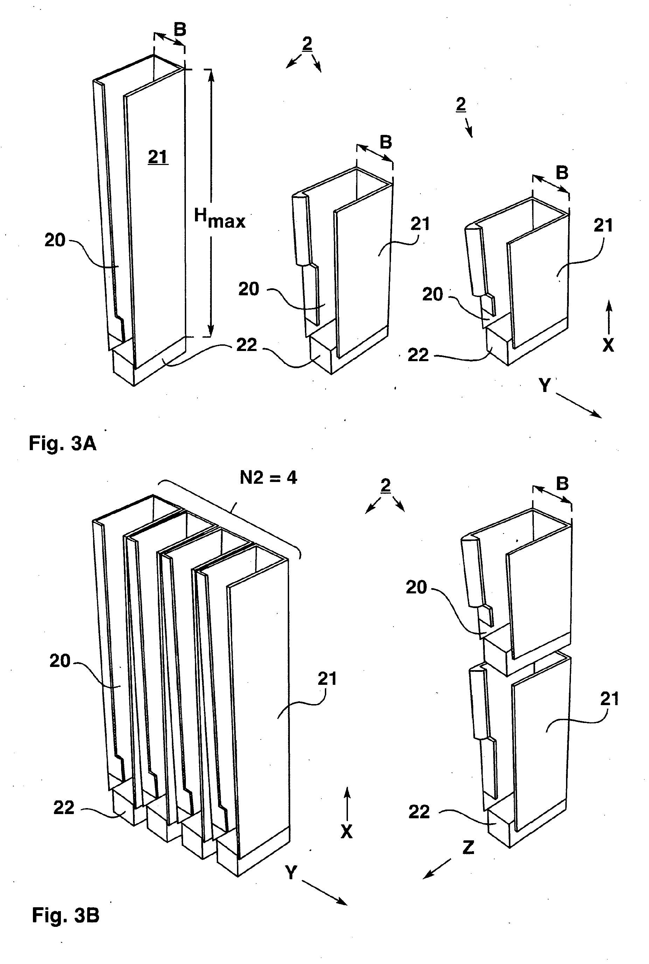

Fig. 3A zeigt die Speicher- und Ausgabeeinrichtung 2 von Fig. 2A zusammen mit weiteren Beispielen von Speicher- und Ausgabeeinrichtungen 2 eines Warenautomaten 5 nach einer Ausführung der Erfindung. Die Speicher- und Ausgabeeinrichtungen 2 weisen alle sich in der ersten Richtung X erstreckende Wände 21, eine offene Seite 20 und eine Ausgabeeinheit 22 auf und unterscheiden sich insbesondere in deren maximaler Füllhöhe Hmax. Die Speicher- und Ausgabeeinrichtungen 2 können derart eingerichtet sein, dass deren sich in der zweiten Richtung Y erstreckende Breite B einstellbar ist. Beispielhaft weisen die Speicher- und Ausgabeeinrichtungen 2 von Fig. 3A etwa die gleiche eingestellte Breite B auf.

Fig. 3B zeigt Beispiele von Kombinationen der Speicher- und Ausgabeeinrichtungen 2 von Fig. 3A. Eine Anzahl von N2 = 4 Speicherund Ausgabeeinrichtungen 2 sind in der zweiten Richtung Y in einer Reihe benachbart zueinander angeordnet. Zwei weitere Speicher- und Ausgabeeinrichtungen 2 sind in der ersten Richtung X übereinander angeordnet. Die Speicher- und Ausgabeeinrichtungen 2 sind dabei jeweils mit ihren offenen Seiten 20 in der dritten Richtung Z angeordnet.

Es ist klar, dass auch die beiden übereinander angeordneten Speicherund Ausgabeeinrichtungen 2 jeweils in einer Reihe in Y-Richtung angeordnet und deren entsprechende Reihen in X-Richtung übereinander angeordnet sein können. Bei derartigen Anordnungen handelt es sich um typische, mögliche Anordnungen von Speicher- und Ausgabeeinrichtungen 2 in einem Warenautomaten 5. Es ist außerdem klar, dass die Speicher- und Ausgabeeinrichtungen 2 dabei auch eine unterschiedliche Breite B aufweisen können.

Fig. 4 zeigt eine schematische Darstellung eines Schnitts durch einen Warenautomaten 5 mit einer Messeinrichtung 3 nach einer Ausführung der Erfindung in perspektivischer Darstellung und in Draufsicht auf die zweite Richtung Y.

Innerhalb eines Gehäuses 50 des Warenautomaten 5 sind Speicher- und Ausgabeeinrichtungen 2 und die Messeinrichtung 3 in einer Messanordnung nach einer Ausführung der Erfindung angeordnet. In den Speicher- und Ausgabeeinrichtungen 2 angeordnete Objekte 1 sind Waren 1, die von dem Warenautomat 5 bestimmungsgemäß ausgegeben werden. In der perspektivischen Darstellung des Warenautomaten 5 sind die Speicher- und Ausgabeeinrichtungen 2 beispielhaft leer dargestellt, während in der Draufsicht eine Speicher- und Ausgabeeinrichtung 2 eine Anzahl von N1 = 2 Waren 1 und eine weitere Speicher- und Ausgabeeinrichtung 2 eine Anzahl von N1 = 4 Waren 1 beherbergt.

Die Speicher- und Ausgabeeinrichtungen 2 sind zur bestimmungsgemäßen Ausgabe ihrer Waren 1 mit ihren offen Seiten 20 einander gegenüberliegend dem Bereich über einem unteren Förderband 51 des Warenautomaten 5 zugewandt und voneinander derart beabstandet, dass von ihren Ausgabeeinheiten 22 ausgegebene Waren 1 auf das Förderband 51 fallen können. Die offenen Seiten 20 korrespondieren dabei mit der Ausgabeseite der Ausgabeeinheiten 22 der Speicher- und Ausgabeeinrichtungen 2.

Eine Vielzahl N2 der Speicher- und Ausgabeeinrichtungen 2 sind in der Y-Richtung jeweils in einer Reihe angeordnet. In dem Warenautomaten sind demnach eine Anzahl von N3 Reihen von Speicher- und Ausgabeeinrichtungen 2 angeordnet, wobei die Reihen jeweils die gleiche Anzahl N2 Speicher- und Ausgabeeinrichtungen 2 aufweisen können oder eine unterschiedliche Anzahl N2 Speicher- und Ausgabeeinrichtungen 2 aufweisen können. In jedem Fall kann sich eine einstellbare Breite B einer Speicher- und Ausgabeeinrichtung 2 auch innerhalb einer der N3 Reihen unterscheiden.

In dem Warenautomat 5 ist eine Messeinrichtung 3 nach einer Ausführung der Erfindung installiert, die benachbart zu einer Automatendecke eines Gehäuses 50 des Warenautomaten 5 in dem freien Bereich über dem Förderband 51 angeordnet ist. In diesem Bereich steht in dem Warenautomaten 5 im Unterschied zu einem Bereich über den Wänden 21 der Speicher- und Ausgabeeinrichtungen 2 für eine Anordnung der Messeinrichtung 3 hinreichend Raum zur Verfügung. Die Messeinrichtung 3 weist vorteilhaft eine Anzahl N3 von Sensoren 31 auf, die der Anzahl N3 der Reihen von Speicher- und Ausgabeeinrichtungen 2 entspricht.

Ein Sensor 31 der N3 Sensoren 31 ist jeweils für eine der N3 Reihen von Speicher- und Ausgabeeinrichtungen 2 vorgesehen. Die Sensoren 31 der Messeinrichtung 3 sind wie vorstehend unter Bezugnahme auf Fig. 1B und 2C und D beschrieben justiert und eingestellt, wobei deren individueller Empfangsbereich ROI und Messwinkel α sowie die mit der Justierung und Einstellung korrespondierende Messhöhe Hmess ihres Mess-Strahls 33 festgelegt ist. Die Messeinrichtung 3 ist in der zweiten Richtung Y verfahrbar ausgerichtet, so dass alle Speicher- und Ausgabeeinrichtungen 2 mit deren Waren 1 und deren Füllstand F der N3 Reihen von Speicher- und Ausgabeeinrichtungen 2 von der Messeinrichtung 3 erfassbar sind.

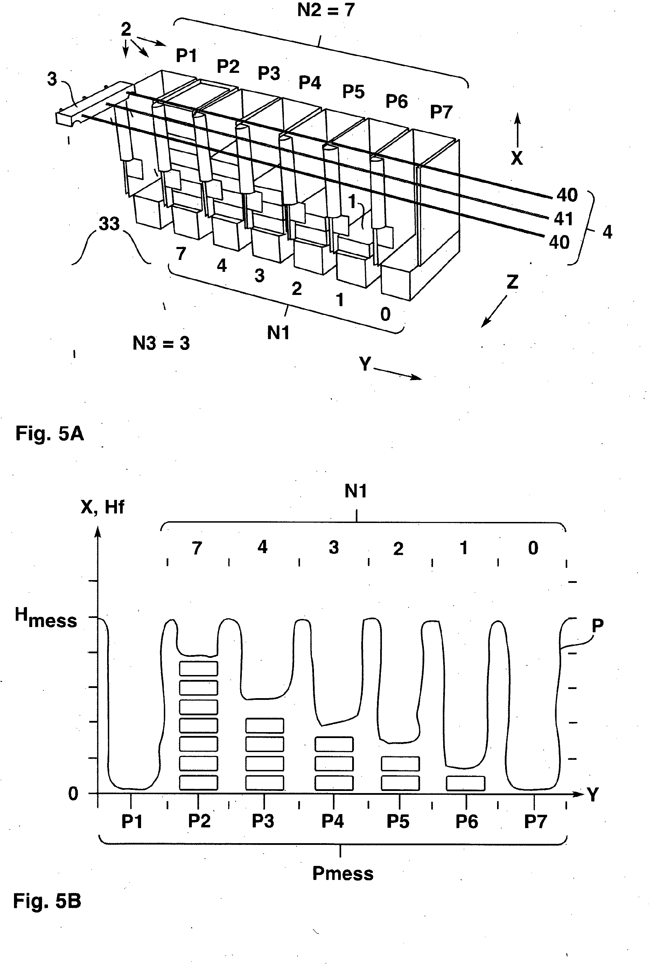

Fig. 5A zeigt einen Bereich des Warenautomaten 5 mit der Messanordnung und der Messeinrichtung 3 von Fig. 4 aus einer anderen Perspektive. In der Zeichnung dargestellt ist die obere Reihe der übereinander angeordneten Reihen von Speicher- und Ausgabeeinrichtungen 2 zusammen mit der N3 Sensoren 31 aufweisenden und wie vorstehend unter Bezugnahme auf Fig. 4 beschrieben justierten und eingestellten Messeinrichtung 3.

Für ein Verfahren der Messeinrichtung 3 in Y-Richtung ist eine Führungseinrichtung 4 mit einer sich in Y-Richtung erstreckenden Linearführung 40 mit zwei parallelen Führungsstangen vorgesehen, die mit an der Messeinrichtung 3 vorgesehenen Gleitlagern zusammenwirken. Die Messeinrichtung 3 weist für ihren Antrieb in Y-Richtung geeigneter Weise einen in der Zeichnung nicht dargestellten Schrittmotor auf, der mit einer sich wie die Führungsstangen ebenfalls in Y-Richtung erstreckenden und mittig zwischen den Führungsstangen angeordneten Zahnstange 41 zusammenwirkt.

Die in Y-Richtung verfahrbare Messeinrichtung 3 weist geeigneter Weise neben dem Schrittmotor und den N3 = 3 Sensoren 31 eine Steuer- und Auswerteeinrichtung und/oder eine Schnittstelle zur signal- und datentechnischen Verbindung mit einer externen Steuer- und Auswerteeinrichtung z.B. des Warenautomaten 5 und eine Stromversorgung auf, die in der Zeichnung nicht dargestellt sind. Die Messeinrichtung 3 kann beispielsweise vollständig drahtlos an der Führungseinrichtung 4 installiert sein, wobei die Stromversorgung beispielsweise mittels einer Powerbank, und die Schnittstelle beispielsweise als Bluetooth Schnittstelle bereitgestellt sein kann.

Die Messeinrichtung 3 kann auch mit einer externen Steuer- und Auswerteeinrichtung und/oder einer externen Stromversorgung verkabelt sein, die jeweils in dem Warenautomaten 5 bereitgestellt sein können. Eine besonders vorteilhafte Messeinrichtung 3 nach einer Ausführung der Erfindung, die mit einer geeigneten Führungseinrichtung 4 eines Messsystems nach einer Ausführung der Erfindung zusammenwirkt, wird nachfolgend unter Bezugnahme auf Fig. 6A und B detailliert beschrieben.

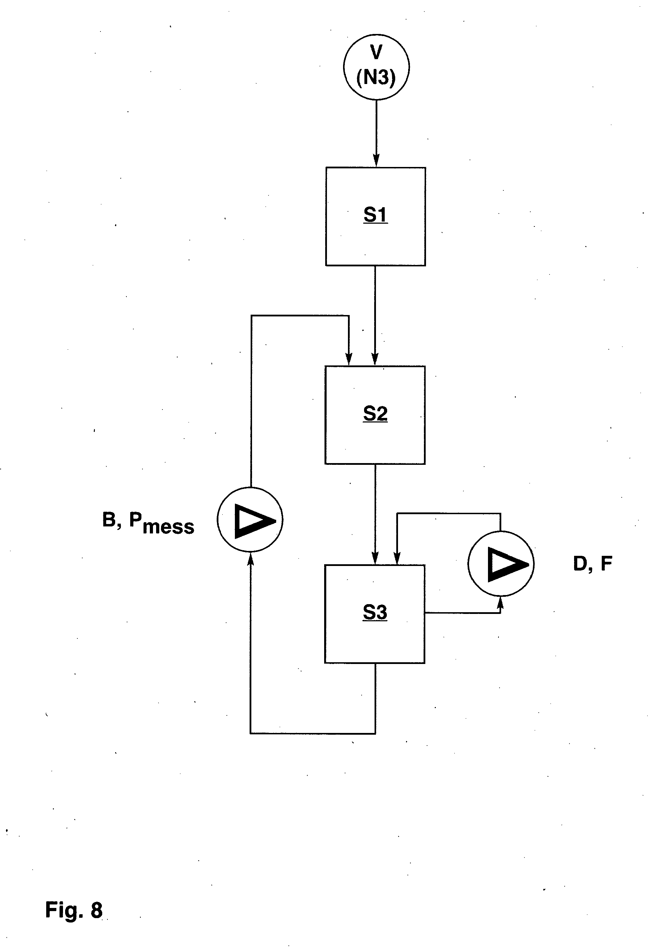

In einem Schritt S3 eines nachfolgend unter Bezugnahme von Fig. 8 beschriebenen Verfahrens V nach einer Ausführung der Erfindung, wird die Messeinrichtung 3 mit ihren Sensoren 31 mittels geeigneter Ansteuerung ihres Schrittmotors vollständig in Y-Richtung verfahren und dabei von den Sensoren 31 eine kontinuierliche Messkurve erfasst, aus der wie vorstehend unter Bezugnahme auf Fig. 2B und C beschrieben jeweils ein Höhenprofil P der Füllhöhe Hf der N3 = 3 Reihen von Steuerund Ausgabeeinrichtungen 2 ermittelt wird. Die Position der Messeinrichtung 3 in Y-Richtung kann dabei mittels absolutem oder relativem Regelkreis beispielsweise unter Verwendung eines weiteren Sensors 31 und vorteilhaft über die Steuerung des Schrittmotors ermittelt werden.

Fig. 5B zeigt hierzu das Höhenprofil P der Reihe mit der Anzahl von N2 = 7 benachbart zueinander angeordneten Speicher- und Ausgabeeinrichtungen 2, die jeweils mit einer unterschiedlichen Anzahl von N1 Waren 1 befüllt sind. Das Profil P weist relative Minima der Füllhöhe Hf auf, die jeweils mit den Waren 1 korrespondieren, und das Profil P weist Maxima der Messhöhe Hmess auf, die mit den Wänden 21 der Speicher- und Ausgabeeinrichtungen 2 korrespondieren.

Als für eine Ermittlung des Füllstands F geeignete Messposition Pmess der Messeinrichtung 3 in X-Richtung wird wie vorstehend unter Bezugnahme auf Fig. 2B und C beschrieben jeweils vorteilhaft eine mittige Position P1 bis P7 zwischen zwei Maxima des Profils P verwendet.

Fig. 6A zeigt ein Messsystem nach einer Ausführung der Erfindung in einer schematischen Darstellung mit einer Messeinrichtung 3 und einer für die Messeinrichtung 3 geeigneten Führungseinrichtung 4, an der die Messeinrichtung 3 für ihren Betrieb bestimmungsgemäß angeordnet ist.

Die Messeinrichtung 3 weist ein zentrales Gehäuse 30 auf, in dem ein Schrittmotor 34, eine Steuer- und/oder Auswerteeinheit 35 und eine Speichereinheit 36 angeordnet sind. Der Schrittmotor 34 weist eine Achse mit einem Zahnrad auf, die mit einer linearen Zahnschiene 41 der in der zweiten Richtung Y angeordneten Führungseinrichtung 4 zusammenwirkt. Der Schrittmotor 34 ist geeigneter Weise derart ausgebildet, dass die Messeinrichtung 3 mit einer Genauigkeit von 1 mm in Y-Richtung verfahrbar und positionierbar ist.

Die Speichereinheit 36 ist insbesondere zur Speicherung der in der zweiten Richtung Y festgelegten Messpositionen Pmess und der an den Messpositionen Pmess ermittelten Messwerte vorgesehen.

Die aus einem geeigneten Kunststoff und bevorzugt aus Metall bereitgestellte Führungseinrichtung 4 ist als eine zweiläufige, innenläufige Linearführung 40 ausgebildet, die mit an der Messeinrichtung 3 vorgesehenen Gleitelementen korrespondiert. Die Führungseinrichtung 4 weist zur Stromversorgung der Messeinrichtung 3 außerdem ein Stromschienensystem 42 mit zwei zu der Linearführung 40 und der Zahnschiene 41 parallel verlaufenden Stromschienen 42 auf, die mit an der Messeinrichtung 3 vorgesehenen Gleit- oder Schleifkontakten zusammenwirken.

An dem Gehäuse 30 der Messeinrichtung 3 erstrecken sich einander in der dritten Richtung Z entgegen gerichtete Sensorhalter 301, an denen eine vorbestimmte Anzahl N3 von Sensoren 31 angeordnet ist. Die Anzahl N3 korrespondiert wie vorstehend beschrieben mit der Anzahl N3 von Reihen mit jeweils benachbart aufeinanderfolgend angeordneten Speicher- und Ausgabeeinrichtungen 2, die insbesondere in einem Warenautomaten 5 beherbergt sein können. Die Messeinrichtung 3 von Fig. 6A ist demnach für einen Warenautomaten 5 mit N3 = 2 Reihen von Speicher- und Ausgabeeinrichtungen 2 ausgelegt, die mit ihren Seiten 20 einander gegenüberliegend in Z-Richtung angeordnet sind.

Zur Befestigung und zur Justierung der Position eines Sensors 31 auf einem Sensorhalter 301 und insbesondere zur mechanischen Einstellung des Winkels α dessen Mess-Strahls 33 können an den Sensorhaltern 301 und/oder den Sensoren 31 geeignete Justierelemente vorgesehen sein.

Die vorstehend beschriebene Messeinrichtung 3 bildet mit ihrer Führungseinrichtung 4 ein Messsystem nach einer Ausführung der Erfindung, das mit einer externen Steuereinrichtung insbesondere eines Warenautomaten 5 steuer-, signal- und datentechnisch in Verbindung stehen kann. Zur Signal- und Datenübertragung von entsprechenden Steuersignalen und Messwerten können diese insbesondere vorteilhaft auf die Spannung moduliert werden, die an den Stromschienen 42 der Führungseinrichtung 4 anliegt.

Für einen besonders zuverlässigen Betrieb erstreckt sich die Zahnstange 41 in der zweiten Richtung Y und ist dabei zentral angeordnet. Hierbei sind außerdem die beiden Stromschienen 42 jeweils auf einer Seite der Zahnschiene 41 und benachbart zu der Zahnschiene 41 angeordnet. Die zweiläufige Linearführung 40 ist mit ihrer ersten und zweiten sich in der zweiten Richtung Y erstreckenden und geeigneter Weise innenläufig ausgebildeten Linearführung 40 jeweils ebenfalls benachbart zu einer Stromschiene 42 angeordnet.

Die Führungseinrichtung 4 weist demnach in der dritten Richtung Z ein Profil mit ihrer ersten Linearführung 40, ersten Stromschiene 42, mittigen Zahnschiene 41, zweiten Stromschiene 42 und ihrer zweiten Linearführung 40 auf, die in dieser Richtung Z aufeinanderfolgend benachbart zueinander angeordnet sind und dabei geeigneter Weise jeweils etwa den gleichen Abstand aufweisen.

Fig. 6B zeigt eine Abwandlung des Messsystems mit der Messeinrichtung 3 und der Führungseinrichtung 4 von Fig. 6A aus einer anderen Perspektive. Der Einfachheit und Übersichtlichkeit halber ist lediglich die Zahnschiene 41 der Führungseinrichtung 4 dargestellt. Das Gehäuse 30 der Messeinrichtung 3 ist mit einer Abdeckung versehen, und die Messeinrichtung 3 weist anders als die Messeinrichtung 3 von Fig. 6A eine Anzahl von N3 = 4 Sensoren 31 auf, die insbesondere für einen nachfolgend unter Bezugnahme von Fig. 8 beschriebenen Warenautomaten 5 geeignet ist. Ansonsten entspricht die Messeinrichtung 3 von Fig. 6B der Messeinrichtung 3 von Fig. 6A, weshalb hier auf die diesbezügliche Beschreibung verwiesen wird. Dies gilt auch für die in Fig. 6B unvollständig dargestellte Führungseinrichtung 4.

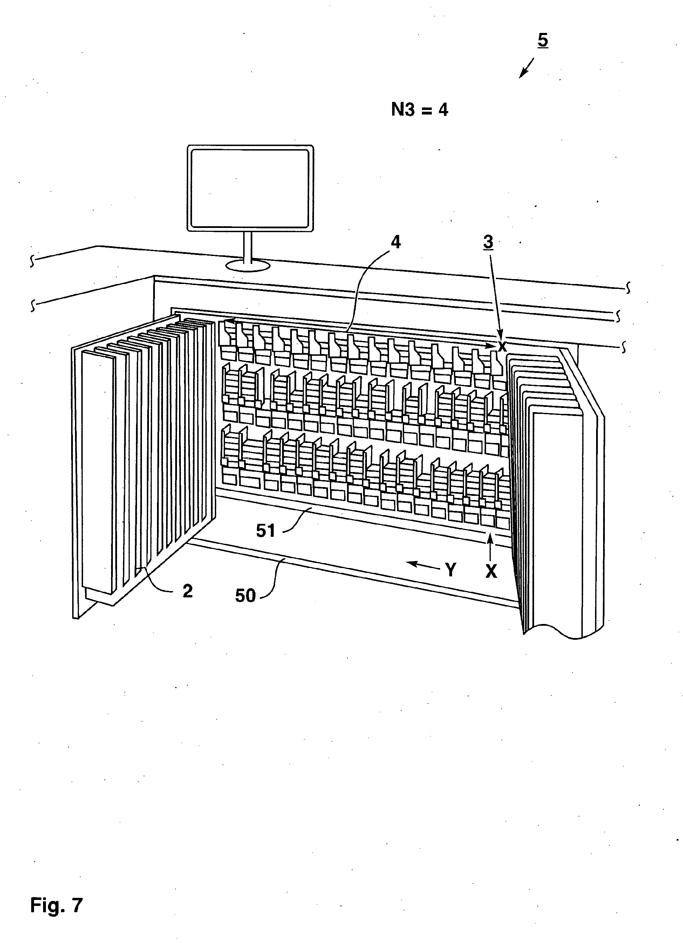

Fig. 7 zeigt eine schematische Darstellung eines Warenautomaten 5 nach einer Ausführung der Erfindung, in dem ein Messsystem mit einer Messeinrichtung 3 und deren Führungseinrichtung 4 in dem Raum über dem Förderband 51 und benachbart zu der Automatendecke des Gehäuses 50 des Warenautomaten 5 installiert sind. Der Warenautomat 5 weist zwei Türen auf, die in der Zeichnung geöffnet sind.

Fig. 8 zeigt in einem Flussdiagramm Schritte eines Verfahrens V zur XY Messung von Objektpositionen und Geometrien in Speicher- und Ausgabesystemen nach einer Ausführung der Erfindung, mit den Schritten S1, S2 und S3.

Das Verfahren ist insbesondere geeignet zur Ermittlung des Füllstands F von Waren 1 in jeweils als Warenschacht 2 ausgebildeten Speicher- und Ausgabeeinrichtungen 2 eines vorstehend beschriebenen Warenautomaten 5, wobei ein ebenfalls vorstehend beschriebenes Messsystem mit einer Führungseinrichtung 4 und einer Messeinrichtung 3 verwendet wird. Die Messeinrichtung 3 weist eine Anzahl N3 = 4 Sensoren 31 auf, wobei jeweils ein Sensor 31 für eine Reihe der in N3 Reihen angeordneten Speicher- und Ausgabeeinrichtungen 2 verwendet wird.

In dem ersten Schritt S1 des Verfahrens wird die Messeinrichtung 3 wie vorstehend unter Bezugnahme auf Fig. 2C und D beschrieben derart relativ zu den Speicher- und Ausgabeeinrichtungen 2 in der zweiten Richtung Y verfahrbar angeordnet und dabei die Position der Sensoren 31 derart eingestellt und justiert, dass eine vorbestimmte Messhöhe Hmess in der ersten Richtung X einer Reihe von Speicher- und Ausgabeeinrichtung 2 von jeweils einem Sensor 31 erfasst wird.

In dem zweiten Schritt S2 wird eine eingangs beschriebene Referenzfahrt der Messeinrichtung 3 in der zweiten Richtung Y mit einer kontinuierlichen Messung der Distanz D durchgeführt und wie vorstehend unter Bezugnahme auf Fig. 2D beschrieben ein Profil P jeder Reihe der Speicher- und Ausgabeeinrichtungen 2 und der Objekte 1 ermittelt. Aus dem Profil P wird für jede Speicher- und Ausgabeeinrichtung 2 eine Messposition Pmess in der zweiten Richtung Y festgelegt. Wie eingangs beschrieben kann eine Referenzfahrt eine Initialisierungsfahrt sein, die bei einer Ersteinrichtung der Messeinrichtung 3 ohne jegliche Waren 1 mit leeren Speicher- und Ausgabeeinrichtungen 2 einmalig durchgeführt wird.

Eine Referenzfahrt kann auch eine Kalibrierungsfahrt sein, die geeigneter Weise bei einer Änderung eines Belegungsplans für die den Speicherund Ausgabeeinrichtungen 2 vorbestimmt zugeordneten Waren 1 und/oder bei Änderungen der Anzahl N2 der Speicher- und Ausgabeeinrichtungen 2 und/oder bei Änderung der Abmessung wenigstens einer Speicher- und Ausgabeeinrichtung 2 in der zweiten Richtung Y durchgeführt wird. Beispielsweise wird eine Kalibrierungsfahrt bei Verschieben oder Entfernen einer Wand 21 wenigstens einer Speicher- und Ausgabeeinrichtung 2 durchgeführt. Eine Kalibrierungsfahrt kann auch mit in zumindest einer zumindest teilweise mit Waren 1 befüllten Speicher- und Ausgabeeinrichtung 2 durchgeführt werden.

Der zweite Schritt S2 wird geeigneter Weise mit zumindest einer leeren Speicher- und Ausgabeeinrichtung 2 durchgeführt, wobei in der zweiten Richtung Y die mittige Position zwischen Positionen zweier benachbarter Minima der Distanz D oder zweier Maxima der Füllhöhe Hf als Messposition (Pmess) zur Ermittlung des Füllstands F festgelegt wird. Der zweite Schritt S2 wird geeigneter Weise insbesondere auch durchgeführt, wenn die Breite B einer Speicher- und Ausgabeeinrichtung 2 neu eingestellt ist.

In einem dritten Schritt S3 des Verfahrens V wird eine Messfahrt der Messeinrichtung 3 in der zweiten Richtung Y mit einer kontinuierlichen Messung der Distanz D durchgeführt. Bei dieser Messfahrt wird wie vorstehend unter Bezugnahme auf Fig. 2B, C und D und 4A und B beschrieben für jede an den Messpositionen Pmess ermittelte Distanz D ein Füllstand F der in einer Speicher- und Ausgabeeinrichtung 2 angeordneten Waren 1 ermittelt, die mit der Messposition Pmess korrespondiert.

Die Messposition Pmess kann insbesondere mittels absolutem oder relativem Regelkreis und insbesondere über die Steuerung des Schrittmotors 34 zum Verfahren der Messeinrichtung 3 in der zweiten Richtung Y ermittelt werden.

Der dritte Schritt S3 wird vorbestimmt zeitlich getaktet wiederholt ausgelöst und/oder auf ein vorbestimmtes Ereignis ausgelöst. Beispielsweise kann ein entsprechendes Steuersignal an die Messeinrichtung 3 zur Durchführung des dritten Schritts S3 von einer Bedienperson des Warenautomaten 5 oder beim Schließen einer Tür des Warenautomaten 5 ausgelöst werden. Außerdem kann ein derartiges Steuersignal bei Ausgabe einer Ware 1 aus dem Warenautomaten 5 ausgelöst werden.

Das vorstehend beschriebene Verfahren V kann insbesondere vorteilhaft zur Ermittlung des Füllstands F einer Speicher- und Ausgabeeinrichtung 2 einer Anzahl von N3 Reihen von Speicher- und Ausgabeeinrichtungen 2 verwendet werden, wobei die verwendete Messeinrichtung 3 eine Anzahl von N3 Sensoren 31 aufweist, und ein Sensor 31 für eine Reihe von Speicher- und Ausgabeeinrichtungen 2 verwendet wird.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutierten Kombinationen nicht die einzig möglichen sind. Insbesondere können einander entsprechende Einheiten oder Merkmalskomplexe aus unterschiedlichen Ausführungsbeispielen miteinander ausgetauscht werden.

### Bezugszeichenliste

- 1: Objekt, Ware
- 2: Speicher- und Ausgabeeinrichtung, Warenschacht
- 20: Seite, Wand
- 21: Wand
- 22: Ausgabeeinheit

- 3: Messeinrichtung
- 30: Gehäuse
- 301: Sensorhalter
- 31: Sensor, Wegsensor, ToF Sensor
- 33: Mess-Strahl
- 34: Antrieb, Schrittmotor
- 35: Steuer- und/oder Auswerteinheit
- 36: Speichereinheit

- 4: Führungseinrichtung
- 40: Linearführung, Schiene, Stange
- 41: Zahnstange, Zahnschiene
- 42: Stromschiene

- 5: Warenautomat
- 50: Gehäuse
- 51: Förderband
- B: Breite
- Dmax, D, Df: Distanz, Abstand
- Hmax, Hmess, Hf: Höhe
- F: Füllstand
- N1: Anzahl Objekte in einer Speicher- und Ausgabeeinrichtung
- N2: Anzahl in einer Reihe benachbarter Speicher- und Ausgabeeinrichtungen
- N3: Anzahl Sensoren, Anzahl Reihen von Speicher- und Ausgabeeinrichtungen in einem Warenautomaten
- P: Profil
- Pmess, P1 bis P7: Position
- S: Linie, Schnittlinie
- S1,S2,S3: Schritt
- V: Verfahren
- X, Y, Z: Richtung

- EA: Empfangsareal
- FOV: Sichtfeld (Field of View)
- ROI: Messbereich, Empfangsbereich (Region of Interest)
- ToF, ΔT: Zeitdifferenz, Flugzeit, Laufzeit,
Laufzeit (time of flight)
- Vc: Lichtgeschwindigkeit

- A, α, β: Winkelbereich, Winkel

## Patentansprüche

1. Verfahren (V) zur XY Messung des Real-Zustands von Objektpositionen und Geometrien in Speicher- und Ausgabesystemen, mit
einer Vielzahl von N2 Speicher- und Ausgabeeinrichtungen (2) zur Aufnahme von Objekten (1), die in einer Speicher- und Ausgabeeinrichtung (2) jeweils aufeinanderfolgend benachbart zueinander in einer ersten Richtung (X) angeordnet sind; wobei die Speicher- und Ausgabeeinrichtungen (2) in einer zweiten Richtung (Y) aufeinanderfolgend benachbart zueinander in einer Reihe angeordnet sind;
unter Verwendung einer in der zweiten Richtung (Y) verfahrbaren Messeinrichtung (3) mit einem zur Erfassung der Distanz (D) eines Objekts (1) geeigneten Sensor (31), mit den Schritten:
- in einem ersten Schritt (S1)
wird die Messeinrichtung (3) derart relativ zu den Speicherund Ausgabeeinrichtungen (2) in der zweiten Richtung (Y) verfahrbar angeordnet und dabei die Position des Sensors (31) derart eingestellt und justiert, dass eine ausgewählte Messhöhe (Hmess) in der ersten Richtung (X) der Speicherund Ausgabeeinrichtungen (2) von dem Sensor (31) erfasst wird;
- in einem zweiten Schritt (S2)
wird eine Referenzfahrt der Messeinrichtung (3) in der zweiten Richtung (Y) mit einer kontinuierlichen Messung der Distanz (D) der Speicher- und Ausgabeeinheiten (2) durchgeführt, und daraus ein Profil (P) der Speicher- und Ausgabeeinrichtungen (2) bestimmt, und aus dem Profil (P) für jede Speicher- und Ausgabeeinrichtung (2) eine Messposition (Pmess) in der zweiten Richtung (Y) festgelegt;
- in einem dritten Schritt (S3)
wird eine Messfahrt der Messeinrichtung (3) in der zweiten Richtung (Y) mit einer kontinuierlichen Messung der Distanz (D) durchgeführt, und für jede an den Messpositionen (Pmess) ermittelte Distanz (D) ein Füllstand (F) der in einer Speicherund Ausgabeeinrichtung (2) angeordneten Objekte (1) ermittelt, der mit der Messposition (Pmess) korrespondiert.

2. Verfahren (V) nach Anspruch 1, wobei die Messposition (Pmess) mittels absolutem oder relativem Regelkreis oder über die Steuerung eines Antriebs (34) zum Verfahren der Messeinrichtung (3) in der zweiten Richtung (Y) ermittelt wird.

3. Verfahren (V) nach Anspruch 2, wobei der zweite Schritt (S2) mit zumindest einer leeren Speicher- und Ausgabeeinrichtung (2) durchgeführt wird; und wobei die Referenzfahrt als Initialisierungsfahrt bei einer Ersteinrichtung der Messeinrichtung (3) ohne jegliche Objekte (1) mit leeren Speicherund Ausgabeeinrichtungen (2) einmalig durchgeführt wird, oder die Referenzfahrt als Kalibrierungsfahrt bei einer Änderung eines Belegungsplans für die den Speicher- und Ausgabeeinrichtungen (2) vorbestimmt zugeordneten Objekte (1) und/oder bei Änderungen der Anzahl N2 der Speicher- und Ausgabeeinrichtungen (2) und/oder bei Änderung der Abmessung wenigstens einer Speicherund Ausgabeeinrichtung (2) in der zweiten Richtung (Y) durchgeführt wird; und
in der zweiten Richtung (Y) eine mittige Position zwischen Positionen zweier benachbarter Minima der Distanz (D) als Messposition (Pmess) zur Ermittlung des Füllstands (F) festgelegt wird.

4. Verfahren (V) nach einem der Ansprüche 1 bis 3, wobei eine Messeinrichtung (3) verwendet wird, deren Sensor (31) ein Wegsensor (31) und insbesondere ein ToF Sensor (31) mit einem einstellbaren Sichtfeld (FOV) und einem einstellbaren Empfangsbereich (ROI) ist, wobei der Empfangsbereich (ROI) und ein Winkel (α) eines Mess-Strahls (33) in dem ersten Schritt (S1) zur Justierung des Sensors (31) eingestellt wird.

5. Verfahren (V) nach einem der Ansprüche 1 bis 4, wobei das Verfahren (V) zur Ermittlung des Füllstands (F) einer Speicher- und Ausgabeeinrichtung (2) einer Anzahl von N3 Reihen von Speicherund Ausgabeeinrichtungen (2) verwendet wird, wobei die verwendete Messeinrichtung (3) eine Anzahl von N3 Sensoren (31) aufweist, und ein Sensor (31) für eine Reihe von Speicher- und Ausgabeeinrichtungen (2) verwendet wird.

6. Verfahren (V) nach einem der Ansprüche 1 bis 5, wobei die Speicher- und Ausgabeeinrichtungen (2) Warenschächte (2) eines Warenautomaten (5) sind, und die Objekte (1) zum Verkauf angebotene Waren (1) sind.

7. Verfahren (V) nach einem der Ansprüche 1 bis 6, wobei der dritte Schritt (S3) vorbestimmt zeitlich getaktet wiederholt wird und/oder auf ein vorbestimmtes Ereignis durchgeführt wird, wobei eine ereignisbezogene zeitgerechte Ermittlung des Real-Zustands der Objekte (1) und der Speicher- und Ausgabeeinrichtungen (2) durchgeführt wird.

8. Messeinrichtung (3) zur Durchführung des Verfahrens (V) nach einem der Ansprüche 1 bis 7 mit einem Wegsensor (31) zur Messung einer Distanz (D) der Vielzahl N2 von Speicher- und Ausgabeeinrichtungen (2) zur Aufnahme von Objekten (1), die in einer Speicher- und Ausgabeeinrichtung (2) jeweils aufeinanderfolgend benachbart zueinander in der ersten Richtung (X) angeordnet sind, wobei
die Speicher- und Ausgabeeinrichtungen (2) in einer zweiten Richtung (Y) aufeinanderfolgend benachbart zueinander in einer Reihe angeordnet sind, und wobei
die Messeinrichtung (3) einen Schrittmotor (34) zum Verfahren der Messeinrichtung (3) in der zweiten Richtung (Y) aufweist.

9. Messeinrichtung (3) nach Anspruch 8, mit
einer Steuer- und/oder Auswerteinheit (35) zur Steuerung des Schrittmotors (34) und/oder
zur Erfassung von Signalen des Sensors (31) und Auswertung der Signale des Sensors (31) und Ermittlung von Messwerten der Distanz (D), einer Füllhöhe (Hf) und eines Füllstands (F) der Speicher- und Ausgabeeinrichtungen (2) an vorbestimmten Positionen (Pmess) des Sensors (31) in der zweiten Richtung (Y), und mit einer Schnittstelle zur Signal- und Datenübertragung.

10. Messeinrichtung (3) nach Anspruch 9, mit
einer Speichereinheit (36) zur Speicherung der in der zweiten Richtung (Y) festgelegten Messpositionen (Pmess) und der an den Messpositionen (Pmess) ermittelten Messwerte.

11. Messeinrichtung (3) nach einem der Ansprüche 8 bis 10, wobei der Sensor (31) ein integriertes Sendeelement, Empfangselement und einen integrierten I2C-Bus aufweist, wobei der Sensor (31) ein Infrarotlicht ToF Sensor (31) mit einem einstellbaren Sichtfeld (FOV) und einem einstellbaren Empfangsbereich (ROI) ist, und wobei der Empfangsbereich (ROI) und ein Winkel (α) eines Mess-Strahls (33) zur Justierung des Sensors (31) eingestellt ist.

12. Messeinrichtung (3) nach einem der Ansprüche 8 bis 11, mit einer Anzahl von N3 Sensoren (31), die in einer dritten Richtung (Z) in einer Reihe angeordnet sind.

13. Messeinrichtung (3) nach einem der Ansprüche 8 bis 12 für einen Warenautomaten (5), wobei die Speicher- und Ausgabeeinrichtungen (2) Warenschächte (2) des Warenautomaten (5) sind und die Objekte (1) zum Verkauf angebotene Waren (1) sind.

14. Messsystem zur Durchführung des Verfahrens nach einem der Ansprüche 1 bis 7 mit einer Messeinrichtung (3) nach einem der Ansprüche 8 bis 13 und einer Führungseinrichtung (4) zur Führung der Messeinrichtung (3) in der zweiten Richtung (Y), wobei die Führungseinrichtung (4) als eine zweiläufige Linearführung (40) ausgebildet ist, die mit an der Messeinrichtung (3) ausgebildeten Gleitelementen korrespondiert, und
die Führungseinrichtung (4) zur Stromversorgung der Messeinrichtung (3) und/oder zur signal- und datentechnischen Verbindung mit einer externen Steuereinheit ein Stromschienensystem mit zwei zu der Linearführung (40) parallel verlaufenden Stromschienen (42) aufweist, die mit an der Messeinrichtung (3) vorgesehenen Gleit- oder Schleifkontakten zusammenwirken, und
die Führungseinrichtung (4) eine Zahnschiene (41) aufweist, die mit dem Schrittmotor (43) zusammenwirkt.

15. Messsystem nach Anspruch 14 für einen Warenautomaten (5) mit einer Vielzahl von in der zweiten Richtung (Y) in Reihen benachbart zueinander angeordneten Speicher- und Ausgabeeinrichtungen (2), und mit einem in der zweiten Richtung (Y) verlaufenden Förderband (51) zur Warenausgabe, wobei das Messsystem an einer Automatendecke eines Gehäuses (50) des Warenautomaten (5) über dem Förderband (51) in dem Warenautomaten (5) installiert ist.
